Europäisches Patentamt

(19) European Patent Office

Office européen des brevets

(11) Publication number: **0 169 041**
**B1**

(12) **EUROPEAN PATENT SPECIFICATION**

(45) Date of publication of patent specification: **11.04.90**

(21) Application number: **85305023.5**

(22) Date of filing: **15.07.85**

(51) Int. Cl.⁵: **F 16 F 1/42, B 60 G 11/22,
B 62 K 25/04**

(54) **Shock absorber.**

(30) Priority: **17.07.84 GB 8418129**

(43) Date of publication of application: -
**22.01.86 Bulletin 86/04**

(45) Publication of the grant of the patent:
**11.04.90 Bulletin 90/15**

(84) Designated Contracting States:
**AT BE CH DE FR GB IT LI NL SE**

(56) References cited:
**EP-A-0 039 499
DE-A-2 740 890
DE-B-1 750 015
GB-A-2 145 798**

(73) Proprietor: **Simpson, Alfred Claude D'Arcy
43 Bleadon Hill Weston-super-Mare
Avon BS24 9JN (GB)**

(72) Inventor: **Simpson, Alfred Claude D'Arcy
43 Bleadon Hill Weston-super-Mare
Avon BS24 9JN (GB)**

(74) Representative: **Jones, Michael Raymond et al
HASELTINE LAKE & CO. Hazlitt House 28
Southampton Buildings Chancery Lane
London WC2A 1AT (GB)**

## Description

This invention relates to a shock absorber, more particularly to a device intended for restricting and cushioning relative movement between two members.

A known unit comprises a square cross-section housing in which is disposed a square cross-section shaft. The sides of the square shaft are not parallel to the sides of the square housing, but are offset by an angle of approximately 45 degrees. In the spaces between the housing and the shaft there is fixed a resiliently compressible material. The resiliently compressible material restricts and cushions relative rotational movement between the housing and the shaft.

From EP—A—0039499 there is known a shearing shock absorber which is provided with a fluid-tight housing in which an "absorber fluid" is used. In addition to the "absorber fluid" it is disclosed that a "rubber-elastic spring body" may be used to absorb shock.

From EP—A—0133944, which has a priority date before, but a publication date after, the priority date of the present application, there is known a flexible shaft coupling which utilizes a single cellular polymeric insert to cushion the effect of relative movement between a pair of coupling elements.

According to the present invention, there is provided a device (1) intended for restricting and cushioning relative movement between two members, the device (1) comprising:

a shaft (2) located in at least one bearing (3) and rotatable with respect to the at least one bearing (3);

first projecting means (4) projecting laterally from, and rotatable with, the shaft (2);

second projecting means (5), fixed with respect to the at least one bearing (3);

a resiliently compressible material (6) disposed to restrict and cushion relative rotational movement of the first and second projecting means; and

means for preventing lateral escape of the resiliently compressible material (8);

characterized in that the resiliently compressible material comprises a plurality of resiliently compressible bodies (6) which are so shaped and packed to define air pockets therebetween.

Preferably, the device is of a form wherein the first projecting means projects radially with respect to the shaft, and/or wherein the second projecting means is disposed in a plane radial with respect to the shaft. It is to be appreciated, however, that the first projecting means may be inclined with respect to the shaft: in the extreme, the first projecting means may be tangential to the shaft. The second projecting means, although preferably disposed in a plane radial with respect to the shaft, may be disposed in a plane inclined to the plane of the shaft.

In one embodiment of the present invention, the first projecting means comprises at least one vane, preferably two vanes, and the second projecting means comprises at least one vane, preferably two vanes.

The number of vanes provided may vary dependent upon the planned function of the finished unit; nevertheless, the presently preferred unit has two radial vanes projecting from the shaft and two radial vanes disposed in a plane radial with respect to the shaft. An embodiment in which the first projecting means comprises three vanes and the second projecting means comprises three vanes is also contemplated. Furthermore, it is to be appreciated that there need not be an equal number of first projecting means and second projecting means. The actual number of vanes, as explained above, will depend upon the function for which the device is intended and the strength and load characteristics required.

In another embodiment of the present invention, each of the first and second projecting means comprise at least one bar. As with the embodiment in which the first and second projecting means each comprise at least one vane, so with this embodiment the at least one bar is preferably radially arranged with respect to the shaft. One advantage of using a bar, as opposed to a vane, is that a bar can be lighter than a vane and gives rise to a device of lighter construction which may also be rather more economical to produce.

With regard to the resiliently compressible material, this is conveniently disposed inwardly of the means for preventing lateral escape of the resiliently compressible material, in the volume not taken up by the first and second projecting means and the shaft. The first and second projecting means are arranged to bear against the resiliently compressible material, being separated from each other by the resiliently compressible material. A turning moment on one of the projecting means will exert, via the resiliently compressible material, a turning moment on the other of the projecting means. The device can, therefore, be used for transmitting rotational motion smoothly since the transmission occurs through the resiliently compressible material.

The provision of the air pockets between the resiliently compressible bodies has been found to substantially improve the cushioning between the first and second projecting means as the individual bodies can compress and change shape more easily.

The resiliently compressible bodies may, for example, be cylindrical elongate bodies, preferably circularly cylindrical elongate bodies, which are disposed parallel, or generally parallel, to the shaft. Although the elongate bodies are preferably circularly cylindrical, other cross sectional shapes are operable: further, there may be a mixture of elongate bodies having different cross sectional shapes in one device according to the invention. As an alternative to cylindrical elongate bodies, the resiliently compressible bodies may be substantially spheroidal. If the resiliently compressible bodies are spheroidal, the first and second projecting means should be in the form of vanes rather than bars such that the projecting means can act on the resiliently compressible bodies. However, when the resiliently compressible bodies are cylindrical elongate bodies, the first and second projecting means may comprise at least one bar, the at least one bar lying perpendicular to the elongate bodies and being capable of acting on the cylindrical elongate bodies.

The resiliently compressible material is conveniently a rubber or a polymer, for example a polyurethane polymer or Sorbathane®—an energy absorbing polymer. The nature of the rubber or polymer will dictate the load characteristics of the device. Different rubbers or polymers can be chosen for devices which are to perform different functions. As examples, elongate rubber bodies having Shore hardness of 50 and 54 have been employed although other rubbers can be chosen. A mixture of different elongate bodies can be employed.

Because the cylindrical elongate bodies or substantially spheroidal bodies are removable, if they wear out during use, they can be replaced by new bodies in a straightforward manner.

In the embodiment wherein there are two diametrically opposed first projecting means and two second projecting means which, in relation to the shaft are diametrically opposed to each other, it is preferred that the first projecting means and the second projecting means are arranged perpendicularly with respect to each other in an "at rest" state of the device. By an "at rest" state of the device is meant a state in which no turning moment is being exerted on either of the projecting means, the resiliently compressible bodies not being compressed. In this embodiment, four radial spaces, or quarter sectors are defined between the four projecting means.

The means for preventing escape of the resiliently compressible material is preferably a cylindrical housing having a major axis which coincides with the shaft. The cylindrical housing is preferably circularly cylindrical although other cross-sectional shapes are operable. It is to be appreciated that the means for preventing escape of the resiliently compressible material may be in the form of one or more spaced apart bands, which for the embodiment wherein the resiliently compressible material comprises elongate bodies, will hold the elongate bodies within the device. Such spaced apart bands would not be appropriate where the resiliently compressible material comprises spheroidal bodies.

The means for preventing escape of the resiliently compressible material may also be in the form of a helix wound round the outside of the resiliently compressible material in order to prevent lateral escape of the resiliently compressible material.

The shaft of the device is supported by at least one bearing and, in one preferred embodiment, by two bearings. The at least one bearing will, in use, be rigidly fixed to a member, for example a first part of an axle, and, directly or indirectly, the bearing will be fixed with respect to the second projecting means. Another member, for example a second part of an axle, the movement of which is intended to be restricted and cushioned by the device, is preferably fixed to the first projecting means, via the shaft. The device thus provides a means for restricting and cushioning relative movement of the two members.

The device may be used as a suspension unit for a car, motor cycle, trailer, caravan or other vehicle; as a self-closing door hinge or gate hinge; in a torsion bar; as a chain tensioner; as a brake-back for plough mould boards; as a jetty fender for ships of all sizes; as an anti-snaking device for trailers or as a flexible coupling. The device is simple to manufacture and significantly cheaper than existing units. It can be refurbished as described above, requires no oil and is not affected by water, in contrast to existing suspension or damping units. Furthermore, the device can carry different loads in opposing directions.

Depending upon the intended function of the device, fibreglass may be used as an alternative to steel for the shaft and the housing of the device and the size of the device can vary from as low as 20 mm in diameter for a gate hinge to, for example, 250 mm diameter, 300 mm length for a ship's fender. Furthermore, by varying the cross-sectional area of the resiliently compressible bodies and by varying the Shore hardness of the resiliently compressible bodies, a multitude of variations can be achieved.

A device which was tested had a diameter of approximately 100 mm and a length of approximately 225 mm, and was found to carry a load of about 2 tonnes at a distance of 500 mm from the axis of the unit. The elongate resiliently compressible bodies used had a Shore hardness of either 54 or 50.

A device according to the present invention has been tested in the mounting of a metal frame intended to be suspended at the rear of a heavy goods vehicle trailer to prevent a car accidentally driving under the trailer. The provision of a device of the present invention on the axis at which the frame is joined to the lorry provides a flexibility between the frame and the trailer. Such a frame would be preferable to prior art frames which are secured immovably to the trailer and which do not have any "give".

For a better understanding of the present invention and to show how the same may be carried into effect, reference will now be made, by way of example only, to the accompanying drawings in which:

Figure 1 shows a perspective, partially broken away, view of one embodiment of a device according to the present invention;

Figure 2 illustrates a slightly modified perspective, partially broken away and exploded view of the device shown in Figure 1;

Figure 3 shows a section on the line III—III of Figure 2;

Figure 4 shows a section on the line IV—IV of Figure 2;

Figure 5 shows a partial perspective view of another embodiment of the invention;

Figure 6 shows a cross-sectional view through the embodiment of Figure 1; and

Figure 7 shows a cross-sectional view through another embodiment of a device according to the present invention.

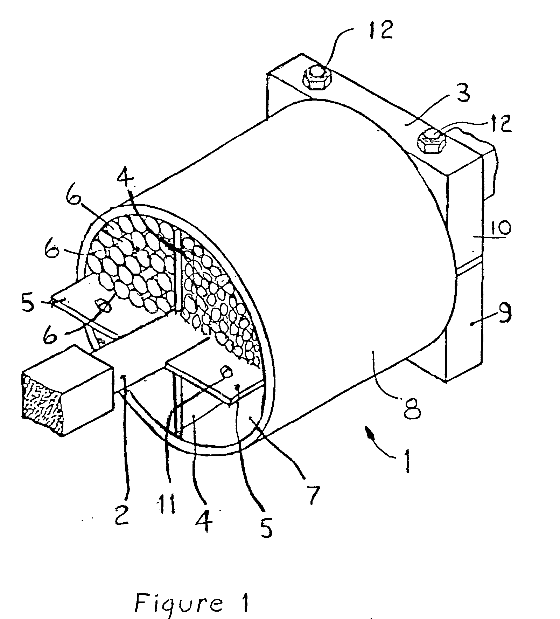

With reference to Figures 1 to 4, there is shown a device 1 intended for restricting and cushioning relative movement of two members (not shown). The device 1 comprises:

a shaft 2 located in bearings 3 (each bearing 3 comprising two half shells 9, 10), the shaft being rotatable with respect to the bearings 3;

first projecting means 4 in the form of vanes, projecting radially from, and rotatable with, the shaft 2;

second projecting means 5 in the form of radial vanes fixed with respect to the bearings 3;

a resiliently compressible material in the form of a plurality of elongate bodies 6 which are provided in the radial spaces 7 between the first projecting means 4 and the second projecting means 5, to restrict and cushion relative rotaional movement of the first and second projecting means 4, 5; and

a housing 8 for preventing lateral escape of the elongate bodies 6.

The second projecting means 5 are provided with holes 11 outside the extent of the housing 8, through which bolts 12 pass to fix the second projecting means 5 with respect to the bearings 3.

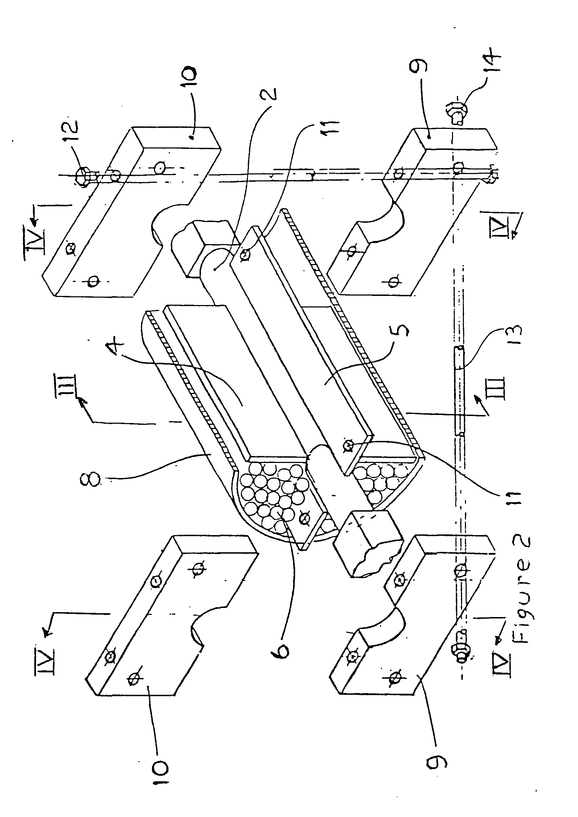

In the slightly different embodiment shown in Figures 2, 3 and 4, the bearings 3 are spaced by four spacers 13 through which run bolts 14 to secure the two bearings 3 together, and enclose the device.

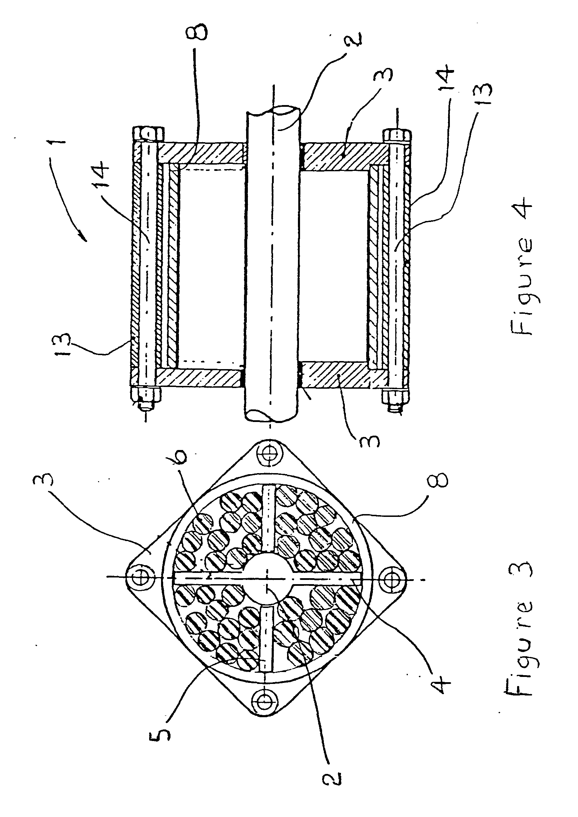

The cross-section shown in Figure 4 does not show the elongate bodies for reasons of clarity.

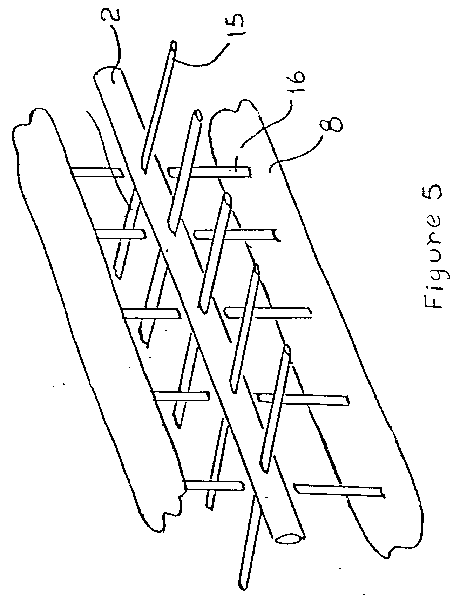

In Figure 5, the shaft 2 of a device according to the present invention is provided with a plurality of first radial bars 15. The first radial bars 15 comprise several diametrically opposed pairs. These first bars 15 constitute the first projecting means. The housing 18 (partly shown) has fixed thereto a plurality of second bars 16 which, in relation to the shaft 2, are in pairs, diametrically opposed to each other. For the sake of clarity, the resiliently compressible material, which will be in the form of elongate bodies, is not shown. The shaft 2 is mounted in bearings (not shown) and is rotatable with respect to the bearings. The housing 8 and second bars 16 are fixed relative to the bearings, either directly or indirectly. A turning moment of the shaft 2 will be transmitted via the resiliently compressible material (not shown) to the second bars 16 and the housing 8.

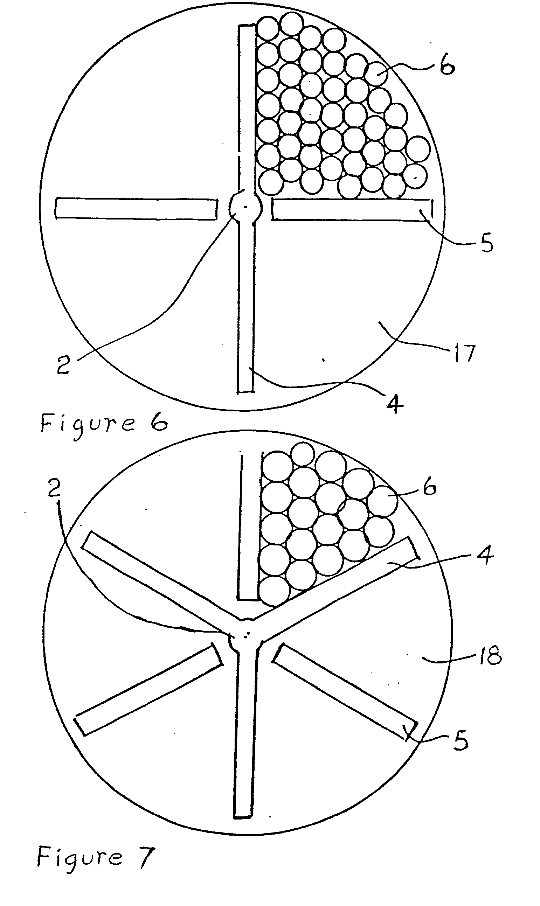

In Figure 6, there are two first projecting means 4 and two second projecting means 5. The first projecting means 4 are diametrically opposed and the second projecting means are in relation to the shaft, diametrically opposed to each other. The planes of the first projecting means 4 and the second projecting means 5 are perpendicular to each other to define four radial spaces 17 which are filled with a resiliently compressible material in the form of elongate bodies 6.

In Figure 7, there are three first projecting means 4 and three second projecting means 5. The respective projecting means are spaced regularly around the shaft to define 60° sectors 18 each of which is filled with a resiliently compressible material in the form of elongate bodies 6.

Thus it can be seen that as the shaft 2 is rotated in a particular direction, the torque is transmitted via the elongate bodies to the second projecting means 5.

**Claims**

1. A device intended for restricting and cushioning relative movement between two members, the device comprising:

a shaft located in at least one bearing and rotatable with respect to the at least one bearing;

first projecting means projecting laterally from, and rotatable with, the shaft;

second projecting means, fixed with respect to the at least one bearing;

a resiliently compressible material disposed to restrict and cusion relative rotational movement of the first and second projecting means; and

means for preventing lateral escape of the resiliently compressible material; characterised in that

the resiliently compressible material comprises a plurality of resiliently compressible bodies which are so shaped and packed to define air pockets therebetween.

2. A device according to Claim 1, wherein the first projecting means projects radially with respect to the shaft, and/or wherein the second projecting means is disposed in a plane radial with respect to the shaft.

3. A device according to Claim 1 or 2, wherein the first projecting means comprises at least one vane, preferably two vanes, and/or wherein the second projecting means comprises at least one vane, preferably two vanes.

4. A device according to Claim 1 or 2, wherein each of the first and second projecting means comprises at least one bar.

5. A device according to Claim 1, wherein the resiliently compressible bodies are cylindrical elongate bodies, preferably circularly cylindrical elongate bodies, disposed parallel, or generally parallel, to the shaft.

6. A device according to Claims 2 and 3, wherein the resiliently compressible bodies are substantially spheroidal.

7. A device according to any preceding claim, wherein the resiliently compressible material is a rubber or a polymer, for example a polyurethane polymer or Sorbathane®.

8. A device according to any preceding claim, wherein there are two diametrically opposed first projecting means and two second projecting means which, in relation to the shaft, are diametrically opposed to each other, the first projecting means and the second projecting means being arranged perpendicularly with respect to each other in an "at rest" state of the device.

9. A device according to any preceding claim, wherein the means for preventing escape of the resiliently compressible material comprises a cylindrical, preferably a circularly cylindrical, housing having a major axis which coincides with the shaft.

**Patentansprüche**

1. Vorrichtung, um eine Relativbewegung zwischen zwei Gliedern zu begrenzen und zu bedämpfen, wobei die Vorrichtung enthält:
eine Welle, die in zumindest einem Lager angeordnet ist und sich im Hinblick auf das zumindest eine Lager drehen kann;
erste vorspringende Teile, die seitlich von der Welle vorspringen und sich mit dieser drehen können;
zweite vorspringende Teile, die im Hinblick auf das zumindest eine Lager befestigt sind;
ein elastische zusammendrückbares Material, das angeordnet ist, um eine relative Drehbewegung der ersten und zweiten vorspringenden Teile zu begrenzen und zu bedämpfen; und
eine Einrichtung, um ein seitliches Austreten des elastisch zusammendrückbaren Materials zu verhindern;
dadurch gekennzeichnet, daß das elastische zusammendrückbare Material eine Vielzahl von elastisch zusammendrückbaren Körpern enthält, die so geformt und gepackt sind, daß sie dazwischen Lufttaschen bilden.

2. Vorrichtung gemäß Anspruch 1, wobei die ersten vorspringenden Teile radial zur Welle vorspringen und/oder die zweiten vorspringenden Teile in einer Ebene radial zur Welle angeordnet sind.

3. Vorrichtung gemäß Anspruch 1 oder 2, wobei die ersten vorspringenden Teile zumindest einen Flügel, vorzugsweise zwei Flügel enthalten und/oder wobei die zweiten vorspringenden Teile zumindest einen Flügel, vorzugsweise zwei Flügel enthalten.

4. Vorrichtung gemäß Anspruch 1 oder 2, wobei jeder erste und zweite vorspringende Teil zumindest einen Stab enthält.

5. Vorrichtung gemäß Anspruch 1, wobei die elastisch zusammendrückbaren Körper längliche Zylinderkörper, vorzugsweise längliche Kreiszylinderkörper sind, die parallel oder im allgemeinen parallel zur Welle angeordnet sind.

6. Vorrichtung gemäß Anspruch 2 und 3, wobei die elastisch zusammendrückbaren Körper im wesentlichen kugelförmig sind.

7. Vorrichtung gemäß jedem der bisherigen Ansprüche, wobei das elastisch zusammendrückbare Material ein Gummi oder ein Polymer ist, z.B. ein Polyurethanpolymer oder Sorbathane®.

8. Vorrichtung gemäß jedem der bisherigen Ansprüche, wobei zwei diametral gegenüberliegende erste vorspringende Teile und zwei zweite vorspringende Teile vorgesehen sind, die im Hinblick auf die Welle einander diametral gegenüberliegen, wobei die ersten vorspringenden Teile und die zweiten vorspringenden Teile in einem "Ruhe"-Zustand der Vorrichtung senkrecht zueinander angeordnet sind.

9. Vorrichtung gemäß jedem der bisherigen Ansprüche, wobei die Einrichtung, die ein Austreten des elastisch zusammendrückbaren Materials verhindert, ein zylindrisches, vorzugsweise kreiszylindrisches Gehäuse enthält, das eine Hauptachse besitzt, die mit der Welle übereinstimmt.

**Revendications**

1. Dispositif destiné à limiter et à amortir un mouvement relatif entre deux organes, ce dispositif comprenant:
une tige engagée dans au moins un palier et pouvant tourner par rapport à ce palier;
un premier élément saillant que se dresse latéralement à partir de la tige et qui peut tourner avec celle-ci;
un second élément saillant fixé par rapport audit palier;
une matière élastiquement compressible disposée de manière à limiter et à amortir un mouvement de rotation relatif du premier et du second élément saillant, et
un moyen pour empêcher la matière élastiquement compressible de s'échapper latéralement,
caractérisé en ce que la matière élastiquement compressible comprend un grand nombre de corps élastiquement compressibles qui sont façonnés et serrés les uns contre les autres de manière à définir des poches d'air entre eux.

2. Dispositif suivant la revendication 1, dans lequel le premier élément saillant s'étend radialement par rapport à la tige et/ou dans lequel le second élément saillant est disposé dans un plan radial par rapport à la tige.

3. Dispositif suivant la revendication 1 ou 2, dans lequel le premier élément saillant comprend au moins une palette et, de préférence, deux palettes, et/ou dans lequel le second élément saillant comprend au moins une palette et, de préférence, deux palettes.

4. Dispositif suivant la revendication 1 ou 2, dans lequel le premier et le second élément saillant comprennent chacun au moins une barre.

5. Dispositif suivant la revendication 1, dans lequel les corps élastiquement compressibles sont de longs corps cylindriques, de préférence de longs corps cylindriques circulaires, disposés parallèlement ou en substance parallèlement à la tige.

6. Dispositif suivant les revendications 2 et 3, dans lequel les corps élastiquement compressibles sont en substance sphéroïdaux.

7. Dispositif suivant l'une quelconque des revendications précédentes, dans lequel la matière élastiquement compressible est un caoutchouc ou un polymère, par exemple un polyuréthanne ou Sorbathane®.

8. Dispositif suivant l'une quelconque des revendications précédentes, dans lequel deux premiers éléments saillants diamétralement opposés sont prévus, ainsi que deux seconds éléments saillants qui, par rapport à la tige, sont diamétralement opposés l'un à l'autre, les premiers éléments saillants et les seconds éléments saillants étant disposés perpendiculairement l'un à l'autre dans un état de "repos" du dispositif.

9. Dispositif suivant l'une quelconque des revendications précédentes, dans lequel le moyen destiné à empêcher la matière élastiquement compressible de s'échapper comprend un boîtier cylindrique, de préférence un boîtier cylindrique circulaire, présentant un axe principal qui coïncide avec la tige.

Figure 1

Figure 2

Figure 4

Figure 3

Figure 5

Figure 6

Figure 7